# EUROPÄISCHE PATENTSCHRIFT

(11) **EP 2 870 500 B1**
(45) Veröffentlichungstag und Bekanntmachung des Hinweises auf die Patenterteilung: **23.10.2019**
(21) Anmeldenummer: 13731322.7
(22) Anmeldetag: 24.06.2013
(51) Int. Cl.: G02B 21/36

(54) **VERFAHREN ZUR VORBEREITUNG UND DURCHFÜHRUNG DER AUFNAHME VON BILDSTAPELN EINER PROBE AUS VERSCHIEDENEN ORIENTIERUNGSWINKELN**
METHOD FOR PREPARING FOR AND CARRYING OUT THE RECORDING OF IMAGE STACKS OF A SAMPLE FROM VARIOUS ORIENTATION ANGLES
PROCÉDÉ DE PRÉPARATION ET DE LA RÉALISATION DE L'ENREGISTREMENT D'UN EMPILAGE DE VUES D'UN ÉCHANTILLON SUIVANT DES ANGLES D'ORIENTATION DIFFÉRENTS

(30) Priorität: 03.07.2012 DE 102012211462
(43) Veröffentlichungstag der Anmeldung: 13.05.2015
(73) Patentinhaber: Carl Zeiss Microscopy GmbH, 07745 Jena (DE)
(72) Erfinder: SELCHOW, Olaf, 07548 Gera (DE); LIPPERT, Helmut, 07745 Jena (DE); TOMANCAK, Pavel, 01097 Dresden (DE)
(74) Vertreter: Patentanwälte Geyer, Fehners & Partner mbB
(86) Internationale Anmeldenummer: PCT/EP2013/063092
(87) Internationale Veröffentlichungsnummer: WO 2014/005866

(56) Entgegenhaltungen:
- EP-A1- 1 530 073
- US-A1- 2010 201 784
- US-B2- 8 059 336
- Uros Krzic: "Multiple-view microscopy with light-sheet based fluorescence microscope", Dissertation, 8. Juli 2009 (2009-07-08), Seiten 1-149, XP055079132, Heidelberg Gefunden im Internet: URL:http://archiv.ub.uni-heidelberg.de/vol ltextserver/9668/1/Uros_Krzic_PhD_Thesis_H eidelberg_University_July_2009_v40.pdf [gefunden am 2013-09-13]
- HUISKEN J ET AL: "Optical Sectioning Deep Inside Live Embryos by Selective Plane Illumination Microscopy", SCIENCE, AMERICAN ASSOCIATION FOR THE ADVANCEMENT OF SCIENCE, WASHINGTON, DC; US, Bd. 305, Nr. 5686, 13. August 2004 (2004-08-13), Seiten 1007-1009, XP002659026, ISSN: 0036-8075, DOI: 10.1126/SCIENCE.1100035
- Uros Krzic ET AL: "Multiview light-sheet microscope for rapid in toto imaging", Nature Methods, 3. Juni 2012 (2012-06-03), XP055078995, DOI: 10.1038/nmeth.2064 Gefunden im Internet: URL:http://www.nature.com/nmeth/journal/v9 /n7/pdf/nmeth.2064.pdf [gefunden am 2013-09-12]

## Beschreibung

### Gebiet der Erfindung

Die Erfindung betrifft ein Verfahren zur Vorbereitung und zur Durchführung der mikroskopischen Aufnahme von Bildstapeln einer Probe aus verschiedenen Orientierungswinkel αᵢ, i = 1, ..., N, mit N einer natürlichen Zahl, d.h. von sogenannten "*Multiview*"-Bildaufnahmen. Bei einem solchen Verfahren wird die Probe in einer Probenhalterung gehalten. Die Probenhalterung selbst liegt ein Probenkoordinatensystem X_{P}, Y_{P}, Z_{P} fest. Die Probenhalterung ihrerseits ist in einem von einem Detektionskoordinatensystem X_{D}, Y_{D}, Z_{D} aufgespannten Raum translatierbar und um mindestens eine Rotationsachse R rotierbar. Außerdem wird eine Detektionsrichtung D vorgegeben, die beispielsweise der optischen Achse eines in einem mikroskopischen Abbildungsverfahren verwendeten Detektionsobjektivs entspricht. Ohne Beschränkung der Allgemeinheit soll die mindestens eine Rotationsachse R dabei zur Achse Y_{P} des Probenkoordinatensystems parallel und die Detektionsrichtung D parallel zur Achse Z_{D} des Detektionskoordinatensystems liegen. Ferner sollen die Achsen Y_{P} und Y_{D} ebenfalls parallel liegen. Diese Vorgaben dienen nur der besseren Beschreib- und Vorstellbarkeit, sind jedoch in keiner Weise zwingend. Die Rotationsachse R kann grundsätzlich auch in eine beliebige andere Richtung in bezug auf das Detektions- oder auch das Probenkoordinatensystem zeigen, auch können mehrere Rotationsachsen vorgesehen sein. Der apparative Aufwand ist in diesen allgemeineren Fällen jedoch höher. Die Lage der beiden Koordinatensysteme relativ zueinander ist dabei bekannt, sie kann beispielsweise mit Hilfe von Kalibrierungsmessungen oder anhand von Geräteparametern vorab bestimmt werden.

### Stand der Technik

Bei der Analyse von Proben unter dem Mikroskop ergibt sich oft die Aufgabe, die Probe aus unterschiedlichen Richtungen, d.h. mit unterschiedlichen Orientierungswinkeln mit einem optischen Kontrastverfahren, beispielsweise mit einem Fluoreszenzverfahren, zu betrachten. Dies kann beispielsweise dann von Vorteil sein, wenn das Anregungslicht und/oder das Detektionslicht für unterschiedliche Orientierungen verschieden ausgeprägt ist, d.h. insbesondere verschiedene Intensitäten aufweist, was beispielsweise durch Streuprozesse in der Probe verursacht werden kann. Um einen räumlichen Eindruck der Probe zu bekommen, ist es darüber hinaus üblich geworden, die Probenaufnahme durch ein optisches Schnittverfahren zu analysieren, wozu für jeden Orientierungswinkel ein Bildstapel verschiedener, entlang der Detektionsrichtung D, der Achse Z_{D}, beabstandeter, paralleler Ebenen aufgenommen wird. Aus diesem Bildstapel kann dann ein Bild der Probe erzeugt werden, welches einen räumlichen Eindruck vermittelt. Senkrecht zur Detektionsrichtung D kann die Probe in den Richtungen X_{D} und Y_{D} durch eine motorisierte Positioniereinheit bewegt werden. Um die unterschiedlichen Orientierungen der Probe herzustellen, ist diese, wie oben beschrieben, um mindestens eine Rotationsachse R rotierbar gelagert.

Diese sogenannten *Multiview-Aufnahmen* sind insbesondere auch für die Untersuchung größerer Proben mit einem SPIM-Verfahren (*selective*/*single-plane illumination microscopy*) von Interesse. Bei diesem Verfahren wird die Probe senkrecht zur Detektionsrichtung D, hier also in der X_{D}-Y_{D}-Ebene mit einem Lichtblatt beleuchtet, welches statisch oder dynamisch, letzteres beispielsweise durch Punktabtastung, erzeugt werden kann. Die Beobachtung kann dabei im Weitfeld erfolgen, so dass ein größerer Probenbereich erfasst werden kann, ohne dass jedoch die Probe großvolumig ausbleicht. Nicht zuletzt aus diesem Grund hat die Bedeutung solcher SPIM-Verfahren für die fluoreszenzmikroskopische Analyse von Proben stark an Bedeutung gewonnen, wie beispielsweise dem Artikel "Light Sheet Fluorescence Microscopy: A Review" von Peter A. Santi, erschienen in der Zeitschrift Journal of Hystochemistry and Zytochemistry, Bd. 59, S. 129-138 aus dem Jahre 2011 entnommen werden kann. Die Grundzüge des Verfahrens werden beispielsweise auch in der WO 2004/053558 A1 beschrieben.

Ähnlich wie die konfokale Laser-Scanning-Microscopy erlauben SPIM-Verfahren als Weitfeld-Beobachtungsverfahren die Aufnahme von räumlich ausgedehnten Objekten in Form optischer Schnitte, wobei die Vorteile vor allem in der Geschwindigkeit, dem geringen Ausbleichen der Probe sowie einer erweiterten Eindringtiefe bestehen. Im Gegensatz zu herkömmlichen Fluoreszenz-Kontrastverfahren in der Mikroskopie im Auf- oder Durchlichtverfahren - als Beispiel seien hier Epi-Fluoreszenz, konfokale Laser-Scanning-Mikroskopie und Mehrphotonenmikroskopie genannt - werden die Fluorophore in der Probe mit Laserlicht in Form eines Lichtblattes oder mehrerer Lichtblätter angeregt. Das Lichtblatt kann, wie oben schon angedeutet, durch einen Abtastmechanismus erzeugt werden, es kann aber auch statisch, beispielsweise mit Hilfe einer Zylinderlinse, erzeugt werden. Die Probe wird dabei in der Regel durch einen in allen Raumrichtungen beweglichen Probenhalter an einer Positioniereinheit gehalten, die Probenhalterung verfügt darüber hinaus auch über eine Drehachse. Die Probe kann auch in einem Gel gelagert sein, so dass sie gegenüber der positionierbaren Probenhalterung unbeweglich ist.

Für *Multiview-Aufnahmen* wird die Probe gedreht und es werden Bilder aus mehreren Richtungen, bei mehreren Orientierungswinkeln aufgenommen. Da die meisten Anwendungen im Bereich der Entwicklungsbiologie zu finden sind, erfolgen diese Aufnahmen an mehreren Zeitpunkten, die über einen Zeitraum von mehreren Stunden bis hin zu mehreren Tagen verteilt sein können. Bisweilen sind dabei v.a. die ersten Zeitpunkte von besonderem Interesse und man ist bemüht den Zeitraum der Probenvorbereitung im Mikroskop möglichst klein zu halten, um keine wesentlichen Entwicklungsschritte zu verpassen. Aus diesem Grunde ist man an einer Automatisierung dieser Art von Aufnahmen interessiert, insbesondere auch was die Vorbereitung dieser Aufnahmen betrifft.

Im Stand der Technik werden für die Vorbereitung und Durchführung von *Multiview-Aufnahmen* üblicherweise folgende Schritte durchgeführt.
1. Ein erster Orientierungs-Winkel wird eingestellt.
2. Die Positioniereinheit mit der Probenhalterung und der Probe wird so eingestellt, dass die Probe bzw. der interessierende Probenbereich in den Bildfeldbereich rückt und außerdem mindestens ein Teil der Probe scharf abgebildet wird, d.h. die Fokusebene in der Probe liegt.
3. Um die Grenzen für die Aufnahme des Bildstapels in Z_{D}-Richtung festzulegen, wird eine erste z-Position gesucht und abgespeichert, bei der sich der interessierende Probenbereich gerade vor bzw. hinter der Fokusebene des Detektionsobjektivs befindet.
4. Eine zweite z-Position wird abgespeichert, wenn die Positioniereinheit so eingestellt ist, dass sich der interessierende Probenbereich gerade hinter bzw. vor der Fokusebene des Detektionsobjektivs befindet.
5. Beide z-Positionen werden als Anfangs- bzw. Endparameter zusammen mit dem Orientierungswinkel und der Position der Probe in der X_{D}-Y_{D}-Ebene abgespeichert, so dass die Parameter zur Festlegung des Bildstapels bekannt sind.
6. Anschließend wird der nächste Orientierungswinkel eingestellt und es werden die Schritte 2.-5. wiederholt.
7. Bis die gewünschte Zahl an Orientierungswinkeln erreicht ist, werden die Schritte 2-6 wiederholt.

Am Ende existiert ein Satz von Parametern zur Festlegung der Koordinaten für die Aufnahme von Bildstapeln entlang der Detektionsrichtung D für jeden Orientierungswinkel.

Ein Problem bei diesem Verfahren stellt insbesondere das Auffinden des interessierenden Probenbereichs nach Einstellen eines neuen Orientierungswinkels dar, insbesondere bei kleinen Bildfeldgrößen, oder bei einem großen Abstand zwischen der Probe und der Rotationsachse, um welche die Probe rotiert wird. Gerade in letzterem Fall bewegt sich der interessierende Probenbereich u.U. auch schon bei sehr kleinen Winkelbewegungen aus dem Bereich des Bildfeldes heraus, da sich durch die Drehung die Position der Probe in Richtung der Achse X_{D} und Z_{D} relativ zur fokussierten Bildfeldmitte, d.h. in Bezug auf das Detektionskoordinatensystem ändert. Die Position des Probenhalters, d.h. in der Regel die Motorposition einer Positioniereinheit, an welcher der Probenhalter angebracht ist, muss um die Beträge Δx, Δz geändert werden, um die Probe wieder in die Fokusmitte und die Bildfeldmitte zu bringen. Der Grund liegt darin, dass die Probe in der Regel nicht genau auf der Rotationsachse R liegt. Die Vorbereitung und Durchführung von *Multiview-Aufnahmen* wird dadurch deutlich erschwert.

Ein Ausweg besteht darin, für die Vorbereitung einer neuen Bildstapelaufnahme bei einem anderen Orientierungswinkel die Probe zunächst bei einer kleineren Vergrößerung zu beobachten, so dass die Probe in der Ebene senkrecht zur Rotationsachse bei der Rotation nicht mehr so schnell aus dem Bildfeld rückt. Dies kann beispielsweise über einen Objektivwechsel am Objektivrevolver vorgenommen werden, oder aber durch ein vom Objektiv unabhängiges, in den Beleuchtungsstrahlengang integriertes Zoom-System. Dies bedeutet jedoch, dass ein zusätzlicher Arbeitsschritt durchgeführt werden muss. Auch die übrigen Arbeitsschritte, wie das Einstellen jedes Orientierungswinkels und das Festlegen der Grenzwerte auf der Z_{D}-Achse für die Stapelaufnahme müssen weiterhin durchgeführt werden.

Eine gewisse Erleichterung bietet das automatisierte Nachführen des Probentisches bzw. der Probenhalterung bei der Rotation, was jedoch nur dann möglich ist, wenn die Lage der Rotationsachse R, also die Lage des Probenkoordinatensystems in Bezug auf die Lage des Detektionskoordinatensystems bekannt ist. Die gesamte Probenhalterung und mit ihr das Probenkoordinatensystem kann dann im Detektionskoordinatensystem so verschoben werden, dass die Probe im Bildfeld bleibt, die Probenhalterung also translatorisch nachgeführt wird. Ist die Lage der Rotationsachse in diesen sogenannten Motorkoordinaten - d.h. auch im Detektionskoordinatensystem - bekannt, so lässt sich die Nachführung für jede Winkelbewegung mit Hilfe einfacher Transformationsmatrizen, im günstigsten Falle einer reinen Drehmatrix, bestimmen und entsprechend einstellen. Auch in diesem Fall entfällt jedoch nicht das manuelle Suchen der optimalen Parameter für die Begrenzung des Bildstapels in Z_{D}-Richtung sowie das Einstellen jedes einzelnen Winkels.

Ein weiteres Verfahren zur Bestimmung von Parametern für die Durchführung mikroskopischer Aufnahmen von Bildstapeln einer Probe aus verschiedenen Orientierungswinkeln ist aus der Dissertation mit dem Titel "Multiple-view microscopy with light-sheet based fluorescence microscope" (Ruprecht-Karls-Universität Heidelberg) von Uroš Kržič aus dem Jahr 2009 bekannt.

EP1530073 A1 offenbart ein Verfahren zur Bestimmung einer Rotationsachse bei der Aufnahme von Bildern aus verschiedenen Orientierungswinkeln.

### Beschreibung der Erfindung

Die Aufgabe der vorliegenden Erfindung besteht daher darin, die Vorbereitung und Durchführung von *Multiview-Aufnahmen* zu vereinfachen, wobei eine möglichst weitgehende Automatisierung als vorteilhaft erachtet wird.

Diese Aufgabe wird bei einem Verfahren der eingangs beschriebenen Art gelöst, indem für mindestens zwei Orientierungswinkel α₁, α₂ zunächst jeweils ein Projektionsbild im Detektionskoordinatensystem aufgenommen wird und anhand dieser Aufnahmen für alle Orientierungswinkel die zur Bildstapelaufnahme notwendigen Parameter bestimmt werden.

Ein solches Verfahren ist durch den Gegenstand des Anspruchs 1 bestimmt.

Eine Abwandlung dieses Verfahrens ist durch den Gegenstand des Anspruchs 4 bestimmt.

Bei der Aufnahme der Projektionsbilder geht man wie folgt vor: Zunächst wird der erste Orientierungswinkel α₁, eingestellt. Dann wird in dem Mikroskop, was zur Aufnahme verwendet werden soll, in einem Schritt a) ein zu untersuchender Probenbereich aus der Probe ausgewählt. Dabei muss die Größe des Bildfeldes so gewählt werden, dass sich der zu untersuchende Probenbereich bei einer Projektion entlang der Detektionsrichtung D mindestens teilweise im Bereich des Bildfeldes befindet, er kann sich also auch vollständig im Bereich des Bildfeldes befinden. Die Beleuchtung kann dabei im einfachsten Fall durch eine gegenüber dem Detektionsobjektiv des Mikroskops angeordnete Lichtquelle erfolgen, da es ausreicht, wenn im Bildfeld lediglich schematisch die Umrisse der Probe wiedergegeben werden. Bei einem Durchlichtbild ist dies in der Regel schon der Fall, wenn die Probe nur näherungsweise im Bereich der Fokusebene angeordnet ist und eine angemessene Vergrößerung gewählt wurde - entweder mit einem Objektiv oder mit einem Zoom-System -, bei der die Probe mindestens teilweise im Bildfeld liegt. Die Fokusebene des Detektionsobjektivs muss nicht notwendigerweise in der Probe liegen. Es ist jedoch von Vorteil im Sinne einer einfacheren Erfassung durch einen Beobachter, wenn sich der zu untersuchende Probenbereich vollständig in dem Volumen befindet, was von den Rändern des Bildfeldes einerseits und der Detektionsachse oder der Achse Z_{D} andererseits aufgespannt wird. Mit Hilfe einer entsprechenden Zoomoptik ist dies ohne großen Aufwand einstellbar. Andererseits kann der zu untersuchende Probenbereich auch größer als das Bildfeld sein, wenn beispielsweise eine manuelle Einstellung vorgenommen wird.

Bei diesem ersten Orientierungswinkel α₁ wird in einem Schritt b) als nächstes ein erster interessierender Bereich ROI₁ festgelegt (ROI - *region of interest*), der sich mindestens teilweise mit dem Bildfeld überlappt. Dieser Bereich ist vorzugsweise ein Ausschnitt des Bildfeldes, wenn das Probenvolumen vom Bildfeld im Sinne der Projektion vollständig erfasst wird. Bei automatisierter Bestimmung wird dies in der Regel der Fall sein, ist aber nicht zwingende Voraussetzung. So kann beispielsweise die Auswahl auch durch einen Benutzer erfolgen, der bei einem bestimmten Bildausschnitt entsprechende Parameter zur Definition des interessierenden Bereichs eingibt, z.B. den Zentrumspunkt und die Ausmaße. Diese Eingabe kann auch erfolgen, wenn nur ein Teil des zu untersuchenden Bereichs im Bildfeld erscheint, der interessierende Bereich kann dann auch über das eigentlich gewählte, sichtbare Bildfeld hinausragen. Bei einer entsprechenden Zoom-Einstellung kann dieser interessierende Bereich ROI1 auch dem gesamten Bildfeld entsprechen, oftmals wird man jedoch nur einen Ausschnitt des Bildfeldes als interessierenden Bereich ROI₁ auswählen, da zumeist ein Übersichtsbild der Probe dargestellt wird und das Auffinden einer bestmöglichen Zoomvergrößerung zu zeitaufwendig wäre. Im einfachsten Fall ist der interessierende Bereich ROI₁ quader- oder kreisförmig ausgebildet, jedoch sind auch andere Formen für die Ausbildung als interessierender Bereich möglich, wie dreieckförmige, quadratförmige, sechseckförmige, etc. Bereiche. Im Prinzip sind beliebige Formen denkbar. Wichtig ist jedoch, dass sich der interessierende Bereich als geometrisches Objekt darstellen und mathematisch beschreiben lässt, nämlich durch Angabe der Koordinaten im Detektionskoordinatensystem oder simple Erzeugungsvorschriften. Prinzipiell ist allerdings auch die Definition eines interessierenden Bereichs oder eines zu untersuchenden Probenbereichs mit einer Abtastkurve, beispielsweise bei der Verwendung eines Laser-Scanning-Mikroskops, ist denkbar, hier gibt die Bahnkurve die Ausdehnung wieder. Ebenfalls ist eine manuelle Auswahl freihändisch mit einer Maus auf einem Bildschirm denkbar, wobei der Bereich dann über die Menge von Pixeln definiert wird. Je einfacher der interessierende Bereich jedoch ausgebildet ist, desto einfacher und schneller zu bewältigen sind allerdings die damit verbundenen Transformationsberechnungen. Dabei kann die Auswahl des ersten interessierenden Bereichs ROI₁ manuell durch einen Anwender erfolgen, aber auch automatisiert, beispielsweise durch Auswertung der mit einer Kamera registrierten Bildintensität: Hier sollte sich die Probe im Durchlicht durch verringerte Intensität bemerkbar machen, bei Dunkelfeldkontrastaufnahmen andererseits sollte die Intensität heller als die Umgebung sein. Auch automatisierte Verfahren zur Strukturerkennung können dabei zum Einsatz kommen. So können beispielsweise Segmentierungsalgorithmen zu einer relativ komplexen Form des ersten interessierenden Bereichs ROI₁ führen.

Ist der erste interessierende Bereich ROI₁ festgelegt, so wird im nächsten Schritt die Position der Bildfeldmitte im Detektionskoordinatensystem in einer Ebene senkrecht zur Detektionsrichtung D bestimmt. Diese kann beispielsweise die Koordinaten (x₁^{a}, y₁^{a}) haben. Sie beschreiben die aktuelle Position des Probentischs bzw. des Probenhalters in Detektionskoordinaten, d.h. beispielsweise in Bezug auf die optische Achse des Detektionsobjektivs und eine dazu senkrechte Ebene, und können den Motorkoordinaten des Tisches oder Halters entsprechen. Sind Rotationen des Probenhalters beispielsweise um eine zur Achse Y_{D} parallele Achse erlaubt, so kann der Ursprung des Detektionskoordinatensystems für die X-Richtung so gewählt werden, dass die Rotationsachse R bzw. die Achse Y_{P} gerade bei x = 0 auf der X_{D}-Achse liegt.

In Abhängigkeit von der Form des ersten interessierenden Bereich ROI₁ wird dann im nächsten Schritt d) im Detektionskoordinatensystem ein Satz von Koordinaten bestimmt. Dabei enthält der Satz von Koordinaten mindestens so viele Werte wie zur eindeutigen Definition der Position und der Abmessung des ersten interessierenden Bereichs ROI₁ im Bildfeld und damit im Detektionskoordinatensystem hinreichend sind. Im Falle eines recheckförmigen Bereichs können dies beispielsweise die Koordinaten sein, die die Eckpunkte des Rechtecks im Bildfeld festlegen. Hier wären dann drei Paare von Koordinaten in der XY-Ebene des Detektionskoordinatensystems für die eindeutige Bestimmung notwendig, die vierte Koordinate kann aus den übrigen abgeleitet werden. Alternativ können die Koordinaten in äquivalenter Weise auch in Vektorschreibweise angegebenen werden, wobei die dritte Koordinate den Ansatzpunkt der Vektoren angibt. In einer weiteren, ebenfalls als äquivalent anzusehenden Alternative geben die Koordinaten jeweils den Mittelpunkt des Rechtecks im Detektionskoordinatensystem an, in den übrigen Koordinaten sind Werte gespeichert, die zu den Abmessungen der Rechecke, also zu der Breite und zu der Höhe korrespondieren. Wichtig ist allein, dass sich die Position und Abmessungen des Rechtecks im Detektionskoordinatensystem eindeutig beschreiben lassen. Im Falle eines kreisförmigen interessierenden Bereichs reicht die Angabe der Mittelpunktskoordinate des Kreises sowie des Radius zur eindeutigen Definition der Position und der Abmessungen dieses Bereichs aus. Für andere geometrische Strukturen lassen sich entsprechend andere Koordinatensätze bestimmen.

Schließlich wird in einem Schritt e) aus Position der Bildfeldmitte des Projektionsbildes und dem Koordinatensatz, der den ersten interessierenden Bereich ROI₁ beschreibt, ein erstes Probenvolumen V₁ im Probenkoordinatensystem bestimmt. Dieses erste Probenvolumen V₁ wird im Detektionskoordinatensystem durch die Abmessungen des ersten interessierenden Bereich ROI₁ in der XY-Ebene und senkrecht dazu durch die Detektionsrichtung bestimmt, es ist also entlang der Detektionsrichtung grundsätzlich unendlich, jedoch in jedem Falle sehr viel weiter ausgedehnt als in der Ebene senkrecht zur Detektionsrichtung D. Über eine entsprechende Transformationsmatrix, die die Lage des Probenkoordinatensystems relativ zum Detektionskoordinatensystem berücksichtigt, kann die Lage und können die Abmessungen des Probenvolumens V₁ auch im Probenkoordinatensystem ebenfalls angegeben werden. Dazu ist es selbstverständlich Voraussetzung, dass die Lage des Probenkoordinatensystems relativ zum Detektionskoordinatensystem bekannt ist, was durch eine entsprechende Kalibrierung erreicht werden kann. Das Probenkoordinatensystem ist dabei an den Probenhalter gekoppelt, d.h. dreht sich dieser oder wird im Detektionskoordinatensystem translatiert, so ändern sich die Koordinaten der Probe im Probenkoordinatensystem nicht.

Ist das erste Probenvolumen V₁ bestimmt, so wird der zweite Orientierungswinkel α₂ eingestellt. Dazu wird die Probe um die Rotationsachse R um die Differenz zwischen den beiden Orientierungswinkeln, α₂ - α₁, rotiert und ggf. im Detektionskoordinatensystem um einen Wert (Δx_{R}, Δz_{R}) translatiert, falls sich die Probe - was die Regel ist - nicht mehr im Bildfeld befindet, so dass sich bei einer Projektion entlang der Detektionsrichtung der zu untersuchende Probenbereich wieder vollständig im Bereich des Bildfeldes befindet.

Anschließend werden den vorangegangenen Schritte, die zur Bestimmung eines Probenvolumens notwendig sind, beim Orientierungswinkel wiederholt, d.h. es wird ein zweiter interessierender Bereich ROI₂ festgelegt, die Position der Bildfeldmitte und ein Koordinatensatz zur eindeutigen Definition der Position und Abmessungen des zweiten interessierenden Bereichs ROI₂ im Detektionskoordinatensystem bestimmt, aus denen dann ein zweites Probenvolumen V₂ im Probenkoordinatensystem bestimmt wird.

Damit ist sowohl die Lage des ersten Probenvolumens V₁ als auch des zweiten Probenvolumens V₂ im Probenkoordinatensystem bekannt. Da die Rotationsachse R parallel zur Achse Y_{P} im Probenkoordinatensystem liegt und ihre Lage in diesem bekannt ist, ist auch die Lage der beiden Volumina V₁ und V₂ relativ zu dieser Rotationsachse R bekannt. Beide Volumina V₁ und V₂ enthalten auch Teile des zu untersuchenden Probenbereichs und überlappen einander daher.

Beide Probenvolumina sind prinzipiell in einer Richtung unendlich ausgedehnt. Da sie jedoch beide den zu untersuchenden Probenbereich, der jeweils durch die RO_{1,2} umschlossen wurde, enthalten, überlappen sie sich in einem Bereich, der auch den interessierenden, zu untersuchenden Probenbereich enthält. Dieses Schnittvolumen, in dem sich die beiden Probenvolumina überlappen, wird nun im Probenkoordinatensystem bestimmt. Damit ist auch die Lage dieses Schnittvolumens relativ zur Rotationsachse R bekannt. Besonders vorteilhaft ist es dabei, wenn die Differenz zwischen den beiden Orientierungswinkeln genau 90° beträgt, da dann das Schnittvolumen am besten eingegrenzt werden kann bzw. am kleinsten ist.

Anhand dieses Schnittvolumens werden dann für alle Orientierungswinkel einschließlich der Orientierungswinkel α₁, α₂ die zur Bildstapelaufnahme notwendigen Parameter im Probenkoordinatensystem bestimmt, d.h. die Anfangspositionen und Endpositionen für die Stapelaufnahme entlang der Detektionsrichtung. Dies wird in das Detektionskoordinatensystem übertragen, in dem die Probe entsprechend positioniert wird und in Detektionsrichtung, also in Z_{D}-Richtung die Bildstapelaufnahme durchgeführt wird.

Da die Lage und die Abmessungen des Schnittvolumens im Probenkoordinatensystem bekannt sind, lassen sich diese Parameter ohne großen Aufwand berechnen und mit Hilfe der Transformationsvorschriften in Werte im Detektionskoordinatensystem übertragen, wobei letzteres vor allem für die Aufnahme der Bildstapel in Z_{D}-Richtung notwendig ist.

Um scharfe Bilder zu erhalten, ist es außerdem notwendig, dass bekannt ist, bei welcher Stellung sich die Rotationsachse in der Bildfeldmitte bzw. im Fokus befindet, was beispielsweise aufgrund der Geräteparameter vorgegeben ist oder in einem separaten Kalibrierungsschritt ermittelt werden kann. Für das Aufsetzen der Bildstapelaufnahmen bzw. insbesondere das vorangehend notwendige Festlegen der Parameter für diese Aufnahme erfordert nicht mehr das Einstellen jedes Orientierungswinkels und das Anfahren der Anfangs- und Endwerte für die Stapelaufnahmen durch einen Anwender, sondern diese Parameter werden automatisch mit Hilfe einer Auswerteeinheit bestimmt.

In einer Abwandlung des Verfahrens wird anstelle der Auswahl eines zweiten interessierenden Bereichs ROI₂ bei einem zweiten Orientierungswinkel das entsprechende Volumen nur anhand eines Orientierungswinkels bestimmt, indem bei dem ersten Orientierungswinkel α₁ zusätzlich zum ersten interessierenden Bereich ROI₁, welcher auch hier rechteckförmig ausgebildet sein kann, außerdem die Anfangs- und Endparameter einer ersten Bildstapelaufnahme bestimmt werden. Dabei handelt es sich, wie oben bereits erwähnt, um die Festlegung der Grenzen in Z_{D}-Richtung, d.h. zwei z-Positionen, zwischen denen sich der erste interessierende Bereich ROI₁ befindet. Diese Anfangs- und Endposition der ersten Bildstapelaufnahme können, wie es im Stand der Technik bekannt ist, manuell festgelegt werden. Alternativ ist auch eine automatisierte Bestimmung möglich, beispielsweise mit Hilfe einer Schärfenauswertung für einzelne Bilder. Aus diesen beiden Parametern sowie dem ersten interessierenden Bereich ROI₁ wird dann ein Probenvolumen V_{P} bestimmt. Da sowohl der erste interessierende Bereich ROI₁ als auch der Abstand zwischen Anfangs- und Endparameter endlich sind, ist auch das Probenvolumen V_{P} bereits endlich, auf die Bestimmung eines Schnittvolumens kann in diesem Fall daher verzichtet werden. Für die weiteren Orientierungswinkel werden dann anhand des Probenvolumen V_{P} mittels der Transformationsvorschriften die zur Aufnahme weiterer Bildstapel notwendigen Parameter im Probenkoordinatensystem bestimmt. Dann wird auch bei diesem abgewandelten Verfahren die Probe im Detektionskoordinatensystem entsprechend positioniert. Schließlich wird die Bildstapelaufnahme durchgeführt.

Die Probe kann bei beiden Varianten auch um mehrere Achsen rotierbar gelagert sein, dies kann in der Transformationsmatrix entsprechend berücksichtigt werden. Zudem kann es von Vorteil sein, wenn die Ebene im Bildfeld, d.h. die Bildfeldebene bereits der Fokusebene entspricht, da sich dann auch die Lage der Rotationsachse relativ zur Fokusebene ohne weiteres bestimmen lässt. Die Bestimmung des Schnittvolumens kann weitestgehend automatisiert erfolgen, d.h. ohne Eingriffe eines Benutzer, wenn die Bilderfassung automatisiert erfolgen, wenn der Anwender am Anfang die gewünschten Orientierungswinkel und Schrittweiten angegeben hat. Auch eine automatisierte Festlegung der Schrittweiten und Orientierungswinkel ist denkbar und im Falle der Schrittweiten oft sinnvoll, wenn die Anfangsebene und die Endebene für die Stapelaufnahmen bei verschiedenen Orientierungswinkeln verschiedene Abstände haben. Zudem müssen die beiden Orientierungswinkel α₁ und α₂ nicht zwangsläufig auch solche Orientierungswinkel sein, bei denen die Bildstapelaufnahmen erfolgen sollen.

In einer besonders bevorzugten Ausgestaltung des Verfahrens erfolgt die Aufnahme von Bildstapeln im Rahmen einer mikroskopischen Probenanalyse, bei der die Probe mit einem Lichtblatt beleuchtet wird, dessen Ausbreitungsebene im wesentlichen senkrecht zur Detektionsrichtung liegt. Insbesondere die Schrittweiteninformation lässt sich hier auch anhand der verwendeten Vergrößerung und der mit diesen gekoppelten Lichtblattparameter ermitteln. Bei anderen Mikroskopieverfahren kann hierfür auch die Tiefendiskriminierung als Parameter herangezogen werden.

Ein besonderer Fall liegt auch bei der Verwendung scannender Mikroskopverfahren vor, bei denen die Ausmaße des aktuell aufgenommenen Bildes nicht durch Kameraparameter sondern durch Scanparameter bestimmt sind. Hier können die Umrisse des Probenvolumens - basierend auf dem Schnitt der interessierenden Bereiche - sehr komplex gestaltet sein, da mit einem Scanner prinzipiell beliebige Formen nachbildbar sind. Da jedoch die Abtastbewegung bekannt ist, lassen sich die Umrisse auch mathematisch anhand der Bewegungskurve beschreiben.

Selbstverständlich ist es auch denkbar, dass zur Bestimmung des Schnittvolumens mehr als zwei Projektionsbilder aufgenommen werden, d.h. mehr als zwei Orientierungswinkel zur Aufnahme der Projektionsbilder eingestellt werden. Dies kann beispielsweise dann von Vorteil sein, wenn die Bestimmung des Schnittvolumens mit hoher Genauigkeit erfolgen soll, da die Informationen, die sich bei der Verwendung von drei und mehr Orientierungswinkeln ergeben, teilweise redundant sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: einen typischen Aufbau eines für das SPIM-Verfahren geeigneten Mikroskops,
- Fig. 2: die Verschiebung der Probe im Detektionskoordinatensystem bei Drehung zur abermaligen Fokussierung bei einem neuen Orientierungswinkel,
- Fig. 3: die Bestimmung von Probenvolumina für zwei Orientierungswinkel in Draufsicht auf den Probenraum und
- Fig. 4: die Bestimmung dieser Probenvolumina im Bildfeld.

### Ausführliche Beschreibung der Zeichnungen

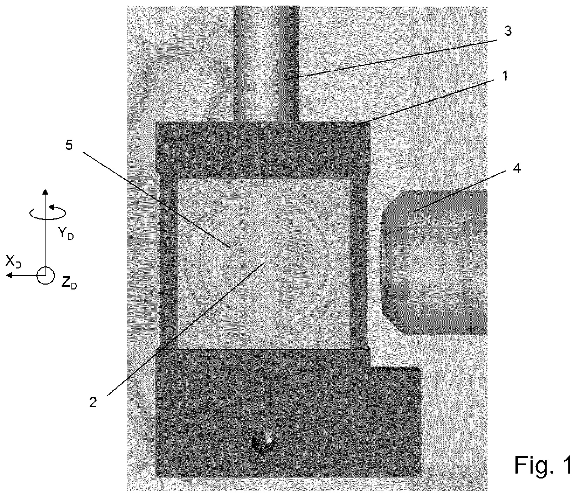

In Figur 1 ist zunächst der Aufbau eines mikroskopischen Systems für eine Probenanalyse gezeigt, bei dem die Probe mit einem Lichtblatt beleuchtet werden kann, wobei die Ausbreitungsebene des Lichtblattes im wesentlichen senkrecht zur Detektionsrichtung liegt, die Analyse der Probe erfolgt im sogenannten SPIM-Verfahren. In einer Probenkammer 1 ist eine in ein Gel wie beispielsweise Agarose gebettete Probe 2 gelagert. Die Probenkammer 1 ist an einem Probenhalter 3 montiert. Die Probenkammer 1 und damit die Probe 2 ist um die Achse des Probenhalters 3, die hier zur Y-Achse eines Detektionskoordinatensystems, Y_{D}, korrespondiert, rotierbar und in allen drei Raumrichtungen translatierbar. Dieses Detektionskoordinatensystem ist linkerhand eingezeichnet, die Rotierbarkeit um die Y_{D}-Achse ist durch den runden Pfeil symbolisiert. Die Probenhalterung 3 ihrerseits spannt ein Probenkoordinatensystem mit den Achse X_{P}, Y_{P}, Z_{P} auf. Im vorliegenden Fall liegen die Achse Y_{D} und Y_{P} parallel, so dass sich bei einer Rotation des Probenkoordinatensystems gegenüber dem Detektionskoordinatensystem nur die Winkel zwischen den Achsen X_{P} und X_{D} bzw. Z_{P} und Z_{D} ändern. Dies erleichtert im vorliegenden Fall die Darstellung, ist jedoch nicht zwingende Voraussetzung. In anderen Aufbauten ist durchaus auch eine Rotation der Probe um andere Achsen oder um mehrere Achsen realisierbar.

Bei der SPIM-Technologie wird das Lichtblatt in der X_{D}-Y_{D}-Ebene erzeugt, hierzu dient im vorliegenden Fall ein Beleuchtungsobjektiv 4. Das Lichtblatt kann statisch erzeugt werden, beispielsweise unter Verwendung einer Zylinderlinse oder aber dynamisch bzw. quasi-statisch mit Hilfe einer Punktabtastung der Probe entlang einer Linie. Für letzteres können beispielsweise aus der Laser-Scanning-Mikroskopie bekannte Abtastvorrichtungen verwendet werden. Die Detektion erfolgt entlang einer Detektionsrichtung G, die parallel zur Achse Z_{D} liegt, hierzu ist ein Detektionsobjektiv 5 vorgesehen. Über eine Kalibrierung bzw. mit Hilfe der Kenntnis der Maschinenparameter zur Positionierung der Probenkammer 1 über die Probenhalterung 3 ist die Lage des Probenkoordinatensystems relativ zum Detektionskoordinatensystem bekannt. Die Lage der Rotationsachse Y_{P}, auch mit R bezeichnet, bezüglich der Fokusebene des Detektionsobjektivs 5 lässt sich vorab durch Kalibrierung oder anhand der Maschinenparameter bestimmen. Aufgrund der Rotierbarkeit der Probenhalterung 3 und damit der Probenkammer 1 eignet sich dieser Aufbau besonders gut für sogenannte *Multiview-Aufnahmen,* wobei Bildstapel aus mehreren Orientierungswinkeln αᵢ, i=1,...,N, mit N einer natürlichen Zahl, aufgenommen werden.

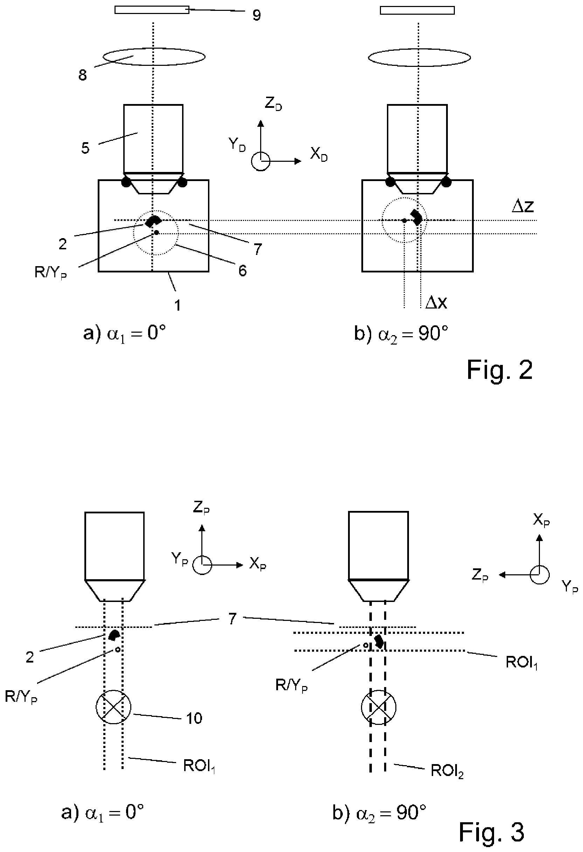

Die grundsätzliche Vorgehensweise bei der Aufnahme solcher Bildstapel aus verschiedenen Orientierungswinkeln ist in Figur 2 beispielhaft für zwei Orientierungswinkel dargestellt. In Figur 2a) ist die Situation für einen Orientierungswinkel α₁ = 0° und in Figur 2 b) für einen Orientierungswinkel α₂ = 90° dargestellt. Die Blickrichtung senkrecht zur Blattebene entspricht der Achse Y_{D}, welche parallel zur Rotationsachse Y_{P} der Probenhalterung 3 und damit der Probenkammer 1 und der Probe 2 ist. Die Probe 2 ist dabei in einem Agarosezylinder 6 eingebettet, liegt jedoch nicht mittig auf der Rotationsachse Y_{P}. In Figur 2a) ist für den Orientierungswinkel α₁ =0° die Probe 2 mindestens teilweise in der Fokusebene 7 des Detektionsobjektivs 5 angeordnet, was jedoch nicht zwingend ist. Es reicht aus, wenn sich die Fokusebene in der Nähe der Bildebene bzw. Lichtblattebene befindet, sofern die Umrisse der Probe bzw. eines zu untersuchenden Probenbereichs erkennbar sind, vorteilhaft kann die Bildfeldebene auch der Fokusebene entsprechen. Über eine Abbildungsoptik 8 wird das Bild der Probe 2 auf eine Detektionseinheit abgebildet, die hier beispielsweise einen ortsauflösenden Flächendetektor in Form eines CMOS- oder CCD-Kamerachips 9 umfasst.

Für jede Einstellung des Orientierungswinkels werden im Stand der Technik üblicherweise Bildstapel entlang der Z_{D}-Achse aufgenommen, wozu die Probe 2 entlang der zu dieser Achse parallelen Detektionsachse D verschoben wird. Dazu werden Anfangs- und Endposition im Probenkoordinatensystem bestimmt, die Probenkammer 1 an der Probenhalterung 3 wird dann entlang der Detektionsrichtung D durch eine ansteuerbare Positioniereinheit entsprechend bewegt.

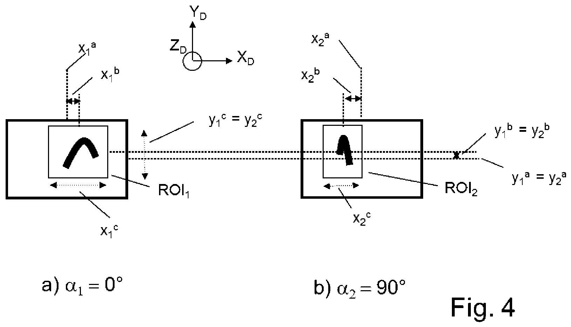

Für einen anderen Orientierungswinkel, im Beispiel α₂ = 90° muss die Probe um die Y_{P}-Achse um genau diesen Winkel rotiert werden. Üblicherweise und insbesondere bei großen Vergrößerungen bewegt sich die Probe 2 dann schon aus dem Bildfeld heraus, da sich durch die Drehung die x- und die z-Koordinate der Probe 2 im Detektionskoordinatensystem, d.h. relativ zur fokussierten Bildfeldmitte ändern. Die Motorposition, d.h. die Position der Probenhalterung 3 bzw. der Probenkammer 1 muss dann um die Beträge Δx, Δz translatiert werden, um die Probe 2 wieder in die fokussierte Bildfeldmitte zu bringen. Anders ausgedrückt muss aufgrund des Abstandes zwischen Probe 2 und Rotationsachse R, die der Achse Y_{P} entspricht, die Probe 2 nachgeführt werden, um sie wieder in Fokusebene und in einen Überlappungsbereich mit der Detektion D zu bekommen. Während die Probennachführung bei im Stand der Technik verwendeten Verfahren für jeden neu eingestellten Orientierungswinkel erfolgen muss, reicht es bei dem im folgenden anhand der Figuren 3 und 4 beschriebenen Verfahren aus, bestimmte Schritte bei nur zwei Orientierungswinkeln durchzuführen, aus denen sich dann die Parameter für die Bildstapelaufnahmen für diese und weitere Orientierungswinkel ableiten lassen. Besteht die Möglichkeit, die Probe 2 aus mehreren Blickwinkeln gleichzeitig zu betrachten, beispielsweise mit einem SPIM-Mikroskop, welches mit mehreren Detektionsobjektiven 5 ausgestattet ist, so können die im folgenden beschriebenen Verfahrensschritte für beide Orientierungswinkel α₁ und α₂ auch gleichzeitig vorgenommen werden. Um die Genauigkeit des Verfahrens zu verbessern, können anfangs auch mehr als zwei Orientierungswinkel vermessen werden.

Im einfachsten Fall erfolgt, wie in Figur 3 angedeutet, die Beleuchtung der Probe 2 über eine dem Detektionsobjektiv 5 gegenüber angeordnete Lichtquelle 10, die bei einem SPIM-Mikroskop beispielsweise zuschaltbar ausgestaltet sein kann. Für die mindestens zwei Orientierungswinkel wird zunächst jeweils ein Projektionsbild im Detektionskoordinatensystem aufgenommen, wobei diese Aufnahmen auch gleichzeitig erfolgen können, wie oben schon erwähnt. Dazu wird in einem Schritt a) zunächst ein zu untersuchender Probenbereich ausgewählt, wobei die Größe eines Bildfeldes so gewählt wird, dass sich der zu untersuchende Probenbereich bei einer Projektion entlang der Detektionsrichtung D mindestens teilweise im Bereich des Bildfeldes befindet, was für die Bestimmung der Aufnahmeparameter für die Bildstapel aus anderen Richtungen wichtig ist. Im gezeigten Beispiel befindet er sich sogar vollständig im Bildfeld. Dabei reicht es aus, wenn lediglich schematisch die Probenumrisse wiedergegeben werden, was bei einem Durchlichtbild in der Regel der Fall ist, wenn die Probe 2 bereits näherungsweise im Bereich der Fokusebene 7 angeordnet ist und eine angemessene Vergrößerung gewählt wurde. Für die Einstellung der Vergrößerung kann ein Zoom-System genauso verwendet werden, wie ein adäquates Detektionsobjektiv. In Figur 4 ist das Bildfeld jeweils durch das äußere, dicker gezeichnete Rechteck angedeutet.

Selbstverständlich kann bei Bedarf auch bereits hier eine herkömmliche Bildstapelaufnahme erfolgen, aus der dann ein Projektionsbild abgeleitet wird. Anstelle einer Durchlichtbeleuchtung, wie sie in Abbildung 3 skizziert ist, lassen sich auch alle anderen möglichen Kontrastverfahren verwenden, beispielsweise auch Fluoreszenzverfahren. In einem Schritt b) wird dann ein erster interessierender Bereich ROI₁ festgelegt, der sich mindestens teilweise mit dem Bildfeld überlappt. Im gezeigten Beispiel handelt es sich bei dem interessierenden Bereich ROI₁ um einen Ausschnitt des Bildfeldes. Dies kann beispielsweise durch den Anwender erfolgen, indem dieser auf dem Bild einen interessierenden Bereich markiert. Die interessierenden Bereiche für die beiden ausgewählten Orientierungswinkel sind in Abbildung 4 als Rechtecke innerhalb des Bildfeldes dargestellt, wobei jedoch auch alle anderen, geometrisch mit einfachen Formeln beschreibbaren Strukturen wie Kreise oder Polygone denkbar sind. Die Festlegung des Ausschnittes des Bildfeldes kann auch automatisiert mit Hilfe von Bildverarbeitungsmethoden, die beispielsweise den Kontrast analysieren, erfolgen. Die interessierenden Bereiche ROI₁ und ROI₂ können auch dem vollständigen Bildfeld entsprechen oder auch komplexe Formen annehmen.

Da es sich um ein Projektionsbild handelt, verfügen die interessierenden Bereich ROI₁ bzw. ROI₂ eigentlich noch über eine dritte Dimension, die bei der in Figur 4 gewählten Darstellung jeweils in Richtung der Detektionsachse D bzw. der Achse Z_{D} liegt, die jedoch im Probenkoordinatensystem bei den gewählten Orientierungswinkeln ebenfalls einen Winkel von 90° miteinander einschließen, wie in Figur 3 gezeigt.

Um nun die Lage der beiden interessierenden Bereiche zueinander im Probenkoordinatensystem beschreiben und zueinander in Beziehung setzen zu können, wird zunächst die Position der Bildfeldmitte im Detektionskoordinatensystem in einer Ebene senkrecht zur Detektionsrichtung D bestimmt. In Figur 4 entspricht die Bildfeldmitte den Koordinaten x₁^{a}, y₁^{a} und x₂^{a}, y₂^{a}. in Fig. 4a) bzw. Fig. 4b). Ist die Rotationsachse parallel zur Y_{D}-Achse, so sind y₁^{a} und y₂^{a} identisch. Für die x-Koordinaten gilt dies nicht, da, wie im Zusammenhang mit Figur 2 bereits beschrieben, eine Verschiebung der Probe erfolgt um sie wieder in das Bildfeld zu bringen.

Der Unterschied in der x-Koordinate im Detektionskoordinatensystem entspricht also der Verschiebung der Probenhaltung 3 entlang der X_{D}-Richtung im Detektionskoordinatensystem. Die Verschiebung in Z_{D}-Richtung macht sich im Bildfeld nicht direkt bemerkbar, außer durch eine eventuell neu einzustellende Fokussierung, falls erforderlich.

In Abhängigkeit von der Form der interessierenden Bereiche ROI₁ und ROI₂ wird im Detektionskoordinatensystem ein Koordinatensatz bestimmt, der zur eindeutigen Definition der Position und der Abmessung dieser interessierenden Bereiche im Bildfeld und damit im Detektionskoordinatensystem hinreichend ist. Im Falle der hier gezeigten rechteckförmigen interessierenden Bereiche ROI₁ und ROI₂ sind dies die Koordinaten x₁^{b} und y₁^{b} sowie x₂^{b} und y₂^{b}, die die Mittenposition des jeweiligen interessierenden Bereichs im Bildfeld angeben, und die Werte x₁^{c}, y₁^{c} sowie x₂^{c}, y₂^{c}, die die Abmessungen der interessierenden Bereiche im Bildfeld und damit im Detektionskoordinatensystem wiedergeben. Bei einer automatischen Markierung sind die y-Koordinaten in der Regel gleich, wenn die Rotationsachse R parallel zur Y_{D}-Achse liegt, bei manueller Markierung werden diese Werte in der Regel voneinander abweichen.

Auch andere Arten der Koordinatendefinition sind möglich, beispielsweise durch Angabe der Eckkoordinaten der Rechtecke oder durch Angabe eines Eckpunktes und zweier Vektoren. In jedem Falle muss der Koordinatensatz zur Definition der Position der Abmessungen des jeweiligen interessierenden Bereich im Bildfeld hinreichend sein, er kann auch überbestimmt sein.

Aus diesen Werten, d.h. der Position der Bildfeldmitte des Projektionsbildes und dem Koordinatensatz wird nun mittels entsprechender Transformation und unter der Berücksichtigung, dass die interessierenden Bereich ROI₁ und ROI₂ in Figur 4 entlang der Detektionsrichtung D aufgrund der Projektion eine von Null verschiedene, d.h. eine endliche oder sogar unendliche Ausdehnung haben, mittels Transformation ein erstes Probenvolumen V₁ und ein zweites Probenvolumen V₂ im Probenkoordinatensystem bestimmt. Das Volumen erstreckt sich in Figur 4 jeweils senkrecht zur Bildebene und ist quaderförmig, in Figur 3 ist die tatsächliche Lage der beiden interessierenden Bereiche bzw. der Probenvolumina unter Berücksichtigung der Transformation im Probenkoordinatensystem dargestellt. Diese relative Lage der beiden interessierenden Bereiche ROI₁ und ROI₂ zueinander kommt zustande, da die Probe 2 zwischen den beiden Festlegungen der interessierenden Bereiche um die Differenz der beiden Orientierungswinkel rotiert und im Detektionskoordinatensystem um Beträge Δx, Δz translatiert wird, falls sich die Probe 2 nach der Drehung nicht wieder so im Bildfeld befindet, so dass sich der zu untersuchende Probenbereich nach der Translation wieder vollständig im Bereich des Bildfeldes befindet. Aus der Lage der beiden interessierenden Bereiche ROI₁ und ROI₂, die die Volumina V₁ und V₂ definieren, lässt sich nun im Probenkoordinatensystem ein Schnittvolumen dieser beiden Volumina bestimmen, in dem dann die Lage des Schnittvolumens relativ zur Rotationsachse R, d.h. der Achse Y_{P} bekannt ist.

Anhand dieses Schnittvolumens lassen sich dann für diese Orientierungswinkel sowie für alle übrigen Orientierungswinkel die zur Bildstapelaufnahme notwendigen Parameter im Probenkoordinatensystem bestimmen. Die Probe wird dann im Detektionskoordinatensystem entsprechend positioniert und die Bildstapelaufnahme durchgeführt. Die für die Bildstapelaufnahme notwendigen Parameter umfassen für jeden Orientierungswinkel den Anfang und das Ende der Bildstapelaufnahme in Z_{D}-Richtung sowie die Positionierung in X_{D}-Richtung. Wenn die Lage der beiden Koordinatensysteme zueinander bekannt ist, ist auch bekannt, bei welcher Stellung der Probenhalterung 3 sich die Rotationsachse R in der Bildfeldmitte bzw. im Fokus befindet, woraus sich die Lage der interessierenden Volumina aus den ROI relativ zur Fokusebene bestimmen lässt. Aus der Kenntnis der Bildmittenlage lässt sich die Lage des entsprechenden Volumens relativ zur Lage der Rotationsachse ermitteln.

Alternativ lässt sich auch die Auswahl eines zweiten interessierenden Bereichs ROI₂ umgehen, indem beim ersten Orientierungswinkel α₁ zusätzlich zu dem ersten interessierenden Bereich ROI₁ die Anfangs- und Endparameter einer ersten Bildstapelaufnahme bei diesem Orientierungswinkel bestimmt werden. Zusammen mit dem ersten interessierenden Bereich ROI₁ wird auf diese Weise ein endliches Probenvolumen V_{P} bestimmt, es muss kein Schnittvolumen mehr bestimmt werden. Für die weiteren Orientierungswinkel werden dann anhand des Probenvolumen V_{P} mittels der Transformationsvorschriften die zur Aufnahme weiterer Bildstapel notwendigen Parameter im Probenkoordinatensystem bestimmt. Dann wird auch bei diesem abgewandelten Verfahren die Probe im Detektionskoordinatensystem entsprechend positioniert. Schließlich wird die Bildstapelaufnahme durchgeführt. Mittels einer entsprechenden Kalibrierung werden dabei vorab die Transformationsvorschriften zur Transformation zwischen Probenkoordinatensystem und Detektionskoordinatensystem bestimmt. Ist die Lage des Probenvolumens V_{P} im Detektionskoordinatensystem für einen Orientierungswinkel bekannt, so ist es somit auch im Probenkoordinatensystem bekannt und kann außerdem für jeden beliebigen Orientierungswinkel im Detektionskoordinatensystem ermittelt werden.

Das aufwendige Aufsetzen von *Multiview-Aufnahmen* von Hand entfällt auf diese Weise, was insbesondere bei entwicklungsbiologischen Beobachtungen, die mehrere Tage dauern können, von großem Vorteil ist.

### Bezugszeichenliste

- 1: Probenkammer
- 2: Probe
- 3: Probenhalterung
- 4: Beleuchtungsobjektiv
- 5: Detektionsobjektiv
- 6: Agarosezylinder
- 7: Fokusebene
- 8: Abbildungsoptik
- 9: Kamerachip
- 10: Lichtquelle

## Patentansprüche

1. Verfahren zur Vorbereitung und Durchführung der mikroskopischen Aufnahme von Bildstapeln einer Probe (2) aus verschiedenen Orientierungswinkeln (αᵢ), i=1,...,N, mit N einer natürlichen Zahl größer oder gleich 2, bei dem
- die Probe (2) in einer Probenhalterung (3) gehalten wird und die Probenhalterung (3) ein Probenkoordinatensystem (X_{P}, Y_{P}, Z_{P}) festlegt, wobei die Probenhalterung (3) in einem von einem Detektionskoordinatensystem (X_{D}, Y_{D}, Z_{D}) aufgespannten Raum translatierbar und um mindestens eine zu einer Achse des Probenkoordinatensystems (Y_{P}) parallele Rotationsachse (R) rotierbar ist, und wobei eine Detektionsrichtung (D) parallel zu einer Achse des Detektionskoordinatensystems (Z_{D}) liegt und die Lage der beiden Koordinatensysteme relativ zueinander bekannt ist,
- für mindestens zwei Orientierungswinkel (α₁, α₂) zunächst jeweils ein Projektionsbild im Detektionskoordinatensystem aufgenommen wird, indem
- der erste Orientierungswinkel (α₁) eingestellt wird,
a) ein zu untersuchender Probenbereich ausgewählt wird, wobei die Größe des Bildfeldes so gewählt wird, dass sich der zu untersuchende Probenbereich bei einer Projektion entlang der Detektionsrichtung (D) mindestens teilweise im Bereich des Bildfeldes befindet,
b) ein erster interessierender Bereich (ROI₁) festgelegt wird, der sich mindestens teilweise mit dem Bildfeld überlappt,
c) die Position der Bildfeldmitte im Detektionskoordinatensystem, welche der aktuellen Position des Probenhalters in Detektionskoordinaten entspricht, in einer Ebene senkrecht zur Detektionsrichtung (D) bestimmt wird,
d) in Abhängigkeit von der Form des ersten interessierenden Bereichs (ROI₁) im Detektionskoordinatensystem ein Koordinatensatz bestimmt wird, der zur eindeutigen Definition der Position und der Abmessungen des ersten interessierenden Bereichs (ROI₁) im Bildfeld und damit im Detektionskoordinatensystem hinreichend ist,
e) aus der Position der Bildfeldmitte des Projektionsbildes und dem Koordinatensatz ein erstes Probenvolumen (V₁) im Probenkoordinatensystem bestimmt wird, welches entlang der Detektionsrichtung unendlich ausgedehnt ist,
- der zweite Orientierungswinkel (α₂) eingestellt wird, wobei die Probe um die Rotationsachse (R) um die Differenz zwischen den beiden Orientierungswinkeln, (α₂ - α₁), rotiert und im Detektionskoordinatensystem ggf. um einen Wert (Δx_{R}, Δz_{R},) translatiert wird, so dass sich bei einer Projektion entlang der Detektionsrichtung (D) der zu untersuchende Probenbereich mindestens teilweise im Bereich des Bildfeldes befindet,
- die Schritte a) bis e) beim zweiten Orientierungswinkel (α₂) durchgeführt werden und dabei ein zweiter interessierender Bereich (ROI₂) festgelegt wird, die Position der Bildfeldmitte, ein weiterer Koordinatensatz im Detektionskoordinatensystem und ein zweites Probenvolumen (V₂) im Probenkoordinatensystem bestimmt wird,
- ein Schnittvolumen der beiden Probenvolumina (V₁) und (V₂) im Probenkoordinatensystem bestimmt wird,
- für die Orientierungswinkel (αᵢ) anhand des Schnittvolumens die zur Bildstapelaufnahme notwendigen Parameter, umfassend die jeweiligen Anfangspositionen und Endpositionen für die Stapelaufnahme entlang der Detektionsrichtung, im Probenkoordinatensystem bestimmt, die Probe (2) im Detektionskoordinatensystem entsprechend positioniert wird und die Bildstapelaufnahme für jeden Orientierungswinkel (αᵢ) durchgeführt wird.

2. Verfahren nach Anspruch 1, **dadurch gekennzeichnet, dass** die interessierenden Bereiche (ROI₁), (ROI₂) rechteckförmig ausgebildet sind, und Koordinaten (x₁^{b}, y₁^{b}), (x₂^{b}, y₂^{b}) jeweils den Mittelpunkt des Rechtecks im Detektionskoordinatensystem angeben, und in Koordinaten (x₁^{c}, y₁^{c}), (x₂^{c}, y₂^{c}) jeweils die Abmessungen der Rechtecke gespeichert sind.

3. Verfahren nach einem der Ansprüche1 oder 2, **dadurch gekennzeichnet, dass** die Differenz zwischen den beiden Orientierungswinkeln, (α₂ - α₁), 90° beträgt

4. Verfahren zur Vorbereitung und Durchführung der mikroskopischen Aufnahme von Bildstapeln einer Probe (2) aus verschiedenen Orientierungswinkeln (αᵢ), i=1,...,N, mit N einer natürlichen Zahl größer oder gleich 2, bei dem
- die Probe (2) in einer Probenhalterung (3) gehalten wird und die Probenhalterung (3) ein Probenkoordinatensystem (X_{P}, Y_{P}, Z_{P}) festlegt, wobei die Probenhalterung (3) in einem von einem Detektionskoordinatensystem (X_{D}, Y_{D}, Z_{D}) aufgespannten Raum translatierbar und um mindestens eine zu einer Achse des Probenkoordinatensystems (Y_{P}) parallele Rotationsachse (R) rotierbar ist, und wobei eine Detektionsrichtung (D) parallel zu einer Achse des Detektionskoordinatensystems (Z_{D}) liegt und die Lage der beiden Koordinatensysteme relativ zueinander bekannt ist,
- für mindestens einen Orientierungswinkel (α₁) zunächst ein Projektionsbild im Detektionskoordinatensystem aufgenommen wird, indem
- der erste Orientierungswinkel (α₁) eingestellt wird,
a) ein zu untersuchender Probenbereich ausgewählt wird, wobei die Größe des Bildfeldes so gewählt wird, dass sich der zu untersuchende Probenbereich bei einer Projektion entlang der Detektionsrichtung (D) mindestens teilweise im Bereich des Bildfeldes befindet,
b) ein erster interessierender Bereich (ROI₁) festgelegt wird, der sich mindestens teilweise ,mit dem Bildfeld überlappt,
c) die Position der Bildfeldmitte im Detektionskoordinatensystem, welche der aktuellen Position des Probenhalters in Detektionskoordinaten entspricht, in einer Ebene senkrecht zur Detektionsrichtung (D) bestimmt wird,
d) in Abhängigkeit von der Form des ersten interessierenden Bereichs (ROI₁) im Detektionskoordinatensystem ein Koordinatensatz bestimmt wird, der zur eindeutigen Definition der Position und der Abmessungen des ersten interessierenden Bereichs (ROI₁) im Bildfeld und damit im Detektionskoordinatensystem hinreichend ist,
e) die Anfangs- und Endparameter einer ersten Bildstapelaufnahme bei diesem Orientierungswinkel (α₁) bestimmt werden,
f) aus der Position der Bildfeldmitte des Projektionsbildes, dem Koordinatensatz und den Anfangs- und Endparametern der ersten Bildstapelaufnahme ein Probenvolumen V_{P} im Probenkoordinatensystem bestimmt wird,
- für die weiteren Orientierungswinkel (αᵢ) anhand des Probenvolumens V_{P} die zur Aufnahme weiterer Bildstapel notwendigen Parameter im Probenkoordinatensystem bestimmt, die Probe (2) im Detektionskoordinatensystem entsprechend positioniert wird und die Bildstapelaufnahme für jeden Orientierungswinkel (αi) durchgeführt wird.

5. Verfahren nach Anspruch 4, **dadurch gekennzeichnet, dass** der interessierende Bereich (ROI₁) rechteckförmig ausgebildet ist, und Koordinaten (x₁^{b}, y₁^{b}) den Mittelpunkt des Rechtecks im Detektionskoordinatensystem angeben, und in Koordinaten (x₁^{c}, y₁^{c}) die Abmessungen des Rechtecks gespeichert sind.

6. Verfahren nach einem der Ansprüche 1 bis 5, **dadurch gekennzeichnet, dass** die Ebene im Bildfeld der Fokusebene entspricht

7. Verfahren nach einem der Ansprüche 1 bis 6, **dadurch gekennzeichnet, dass** die Lage der Rotationsachse (R) relativ zum Detektionskoordinatensystem in einem der Aufnahme vorangehenden Kalibrierungsschritt bestimmt wird.

8. Verfahren nach einem der Ansprüche 1 bis 7, **dadurch gekennzeichnet, dass** die Aufnahme von Bildstapeln im Rahmen einer mikroskopischen Probenanalyse erfolgt, bei der die Probe (2) mit einem Lichtblatt beleuchtet wird, dessen Ausbreitungsebene im wesentlichen senkrecht zur Detektionsrichtung (D) liegt.

9. Verfahren nach einem der Ansprüche 1 bis 8, **dadurch gekennzeichnet, dass** die Bestimmung des Schnittvolumens automatisiert erfolgt.

## Claims

1. Method for preparing and taking a microscopic recording of image stacks of a sample (2) from different orientation angles (αᵢ), i = 1,..., N, with N being a natural number greater than or equal to 2, in which
- the sample (2) is held in a sample holder (3), and the sample holder (3) defines a sample coordinate system (X_{P}, Y_{P}, Z_{P}), wherein the sample holder (3) is translatable to a space defined by a detection coordinate system (X_{D}, Y_{D}, Z_{D}) and is rotatable about at least one rotational axis (R) that is parallel to an axis of the sample coordinate system (Y_{P}), and wherein a detection direction (D) lies parallel to an axis of the detection coordinate system (Z_{D}) and the location of the two coordinate systems relative to one another is known,
- in each case a projection image in the detection coordinate system is recorded initially for at least two orientation angles (α₁, α₂) by virtue of the fact that
- the first orientation angle (α₁) is set,
a) a sample region to be examined is selected, wherein the size of the image field is chosen such that the sample region to be examined is situated at least partially in the region of the image field in the case of a projection along the detection direction (D),
b) a first region of interest (ROI₁) that at least partially overlaps with the image field is defined,
c) the position of the image field centre in the detection coordinate system that corresponds to the current position of the sample holder in detection coordinates is determined in a plane perpendicular to the detection direction (D),
d) in dependence on the shape of the first region of interest (ROI₁) in the detection coordinate system, a set of coordinates is determined that is sufficient for the unique definition of the position and the dimensions of the first region of interest (ROI₁) in the image field and thus in the detection coordinate system,
e) a first sample volume (V₁) of infinite extent along the detection direction is determined in the sample coordinate system from the position of the image field centre of the projection image and the set of coordinates,
- the second orientation angle (α₂) is set, wherein the sample is rotated about the rotational axis (R) by the difference between the two orientation angles, (α₂-α₁) and is translated in the detection coordinate system possibly by a value (ΔX_{R}, ΔZ_{R}) such that the sample region to be examined is situated at least partially in the region of the image field in the case of a projection along the detection direction (D),
- the steps a) to e) are carried out for the second orientation angle (α₂) and in the process a second region of interest (ROI₂) is defined, the position of the image field centre, a further set of coordinates in the detection coordinate system and a second sample volume (V₂) in the sample coordinate system are determined,
- an intersection volume of the two sample volumes (V₁) and (V₂) in the sample coordinate system is determined,
- the parameters necessary for the image stack recording, comprising the respective starting positions and end positions for the stack recording along the detection direction, in the sample coordinate system are determined for the orientation angles (αᵢ) on the basis of the intersection volume, the sample (2) in the detection coordinate system is correspondingly positioned and the image stack recording is performed for each orientation angle (αᵢ).

2. Method according to Claim 1, **characterized in that** the regions of interest (ROI₁), (ROI₂) have a rectangular shape, and coordinates (x₁^{b}, y₁^{b}), (x₂^{b}, y₂^{b}) in each case indicate the centre of the rectangle in the detection coordinate system and in each case the dimensions of the rectangles are stored in coordinates (x₁^{c}, y₁^{c}), (x₂^{c}, y₂^{c}).

3. Method according to either of Claim 1 or 2, **characterized in that** the difference between the two orientation angles, (α₂-α₁), is 90°.

4. Method for preparing and taking a microscopic recording of image stacks of a sample (2) from different orientation angles (αᵢ), i = 1,..., N, with N being a natural number greater than or equal to 2, in which
- the sample (2) is held in a sample holder (3), and the sample holder (3) defines a sample coordinate system (X_{P}, Y_{P}, Z_{P}), wherein the sample holder (3) is translatable to a space defined by a detection coordinate system (X_{D}, Y_{D}, Z_{D}) and is rotatable about at least one rotational axis (R) that is parallel to an axis of the sample coordinate system (Y_{P}), and wherein a detection direction (D) lies parallel to an axis of the detection coordinate system (Z_{D}) and the location of the two coordinate systems relative to one another is known,
- a projection image in the detection coordinate system is recorded initially for at least one orientation angle (α₁) by virtue of the fact that
- the first orientation angle (α₁) is set,
a) a sample region to be examined is selected, wherein the size of the image field is chosen such that the sample region to be examined is situated at least partially in the region of the image field in the case of a projection along the detection direction (D),
b) a first region of interest (ROI₁) that at least partially overlaps with the image field is defined,
c) the position of the image field centre in the detection coordinate system that corresponds to the current position of the sample holder in detection coordinates is determined in a plane perpendicular to the detection direction (D),
d) in dependence on the shape of the first region of interest (ROI₁) in the detection coordinate system, a set of coordinates is determined that is sufficient for the unique definition of the position and the dimensions of the first region of interest (ROI₁) in the image field and thus in the detection coordinate system,
e) the starting and end parameters of a first image stack recording at this orientation angle (α₁) are determined,
f) a sample volume V_{P} in the sample coordinate system is determined from the position of the image field centre of the projection image, the set of coordinates and the starting and end parameters of the first image stack recording,
- the parameters necessary for recording further image stacks in the sample coordinate system is determined for the further orientation angles (α₁) on the basis of the sample volume V_{P}, the sample (2) in the detection coordinate system is correspondingly positioned and the image stack recording for each orientation angle (αᵢ) is performed.

5. Method according to Claim 4, **characterized in that** the region of interest (ROI₁) has a rectangular shape, and coordinates (x₁^{b}, y₁^{b}) indicate the centre of the rectangle in the detection coordinate system and the dimensions of the rectangles are stored in coordinates (x₁^{c}, y₁^{c}).

6. Method according to one of Claims 1 to 5, **characterized in that** the plane in the image field is the focal plane.

7. Method according to one of Claims 1 to 6, **characterized in that** the location of the rotational axis (R) relative to the detection coordinate system is determined in a calibration step preceding the recording.

8. Method according to one of Claims 1 to 7, **characterized in that** the recording of image stacks is performed as part of a microscopic sample analysis in which the sample (2) is illuminated with a light sheet, the plane of extent of which is substantially perpendicular to the detection direction (D).

9. Method according to one of Claims 1 to 8, **characterized in that** the determination of the intersection volume is effected automatically.

## Revendications

1. Procédé de préparation et d'exécution de l'enregistrement microscopique de piles d'images d'un échantillon (2) à partir de différents angles d'orientation (αᵢ), i = 1, ..., N, N étant un nombre naturel égal ou supérieur à 2, procédé avec lequel
- l'échantillon (2) est maintenu dans un porte-échantillon (3) et le porte-échantillon (3) fixe un système de coordonnées d'échantillon (Xₚ, Yₚ, Zₚ), le porte-échantillon (3) pouvant effectuer une translation dans un espace couvert par un système de coordonnées de détection (X_{D}, Y_{D}, Z_{D}) et pouvant effectuer une rotation autour d'au moins un axe de rotation (R) parallèle à un axe du système de coordonnées d'échantillon (Yₚ), et une direction de détection (D) étant parallèle à un axe du système de coordonnées de détection (Z_{D}) et la position des deux systèmes de coordonnées l'un par rapport à l'autre étant connue,
- pour au moins deux angles d'orientation (α₁, α₂), une image de projection est tout d'abord respectivement enregistrée dans le système de coordonnées de détection en
- réglant le premier angle d'orientation (α₁),
a) une zone à examiner de l'échantillon est sélectionnée, la taille du champ d'image étant choisie de telle sorte que la zone à examiner de l'échantillon, dans le cas d'une projection le long de la direction de détection (D), se trouve au moins partiellement dans la zone du champ d'image,
b) une première zone d'intérêt (ROI₁₎ est fixée, laquelle chevauche au moins partiellement le champ d'image,
c) la position du centre du champ d'image dans le système de coordonnées de détection, qui correspond à la position actuelle du porte-échantillon dans les coordonnées de détection, est déterminée dans un plan perpendiculaire à la direction de détection (D),
d) un jeu de coordonnées est déterminé dans le système de coordonnées de détection en fonction de la forme de la première zone d'intérêt (ROI₁), lequel est suffisant pour une définition univoque de la position et des dimensions de la première zone d'intérêt (ROI₁) dans le champ d'image et ainsi dans le système de coordonnées de détection,
e) un premier volume d'échantillon (V₁) dans le système de coordonnées d'échantillon est déterminé à partir de la position du centre du champ d'image de l'image de projection et du jeu de coordonnées, lequel s'étend à l'infini le long de la direction de détection,
- le deuxième angle d'orientation (α₂) est réglé, l'échantillon effectuant une rotation autour de l'axe de rotation (R) de la différence entre les deux angles d'orientation (α₂ - α₁) et effectuant éventuellement une translation dans le système de coordonnées de détection d'une valeur (Δx_{R}, Δz_{R}), de sorte que lors d'une projection le long de la direction de détection (D), la zone à examiner de l'échantillon se trouve au moins partiellement dans la zone du champ d'image,
- les étapes a) à e) sont exécutées avec le deuxième angle d'orientation (α₂) et, à cette occasion, une deuxième zone d'intérêt (ROI₂) est fixée, la position du centre du champ d'image, un jeu de coordonnées supplémentaire dans le système de coordonnées de détection et un deuxième volume d'échantillon (V₂) dans le système de coordonnées d'échantillon sont déterminés,
- un volume de coupe des deux volumes d'échantillon (V₁, V₂) est déterminé dans le système de coordonnées d'échantillon,
- les paramètres nécessaires à l'enregistrement de la pile d'images, comprenant les positions de début et les positions de fin respectives pour l'enregistrement de la pile le long de la direction de détection, sont déterminés dans le système de coordonnées d'échantillon pour les angles d'orientation (αᵢ) à l'aide du volume de coupe, l'échantillon (2) est positionné en conséquence dans le système de coordonnées de détection et l'enregistrement de la pile d'images est effectué pour chaque angle d'orientation (αᵢ).

2. Procédé selon la revendication 1, **caractérisé en ce que** les zones d'intérêt (ROI₁, ROI₂) sont de configuration rectangulaire et les coordonnées (x₁^{b}, y₁^{b}), (x₂^{b}, y₂^{b}) indiquent respectivement le centre du rectangle dans le système de coordonnées de détection et les dimensions des rectangles sont respectivement mémorisées dans les coordonnées (x₁^{c}, y₁^{c}), (x₂^{c}, y₂^{c}).

3. Procédé selon l'une des revendications 1 ou 2, **caractérisé en ce que** la différence entre les deux angles d'orientation (α₂ - α₁) est égale à 90°.

4. Procédé de préparation et d'exécution de l'enregistrement microscopique de piles d'images d'un échantillon (2) à partir de différents angles d'orientation (αᵢ), i = 1, ..., N, N étant un nombre naturel égal ou supérieur à 2, procédé avec lequel
- l'échantillon (2) est maintenu dans un porte-échantillon (3) et le porte-échantillon (3) fixe un système de coordonnées d'échantillon (Xₚ, Yₚ, Zₚ), le porte-échantillon (3) pouvant effectuer une translation dans un espace couvert par un système de coordonnées de détection (X_{D}, Y_{D}, Z_{D}) et pouvant effectuer une rotation autour d'au moins un axe de rotation (R) parallèle à un axe du système de coordonnées d'échantillon (Yₚ), et une direction de détection (D) étant parallèle à un axe du système de coordonnées de détection (Z_{D}) et la position des deux systèmes de coordonnées l'un par rapport à l'autre étant connue,
- pour au moins un angle d'orientation (α₁), une image de projection est tout d'abord enregistrée dans le système de coordonnées de détection en
- réglant le premier angle d'orientation (α₁),
a) une zone à examiner de l'échantillon est sélectionnée, la taille du champ d'image étant choisie de telle sorte que la zone à examiner de l'échantillon, dans le cas d'une projection le long de la direction de détection (D), se trouve au moins partiellement dans la zone du champ d'image,
b) une première zone d'intérêt (ROI₁) est fixée, laquelle chevauche au moins partiellement le champ d'image,
c) la position du centre du champ d'image dans le système de coordonnées de détection, qui correspond à la position actuelle du porte-échantillon dans les coordonnées de détection, est déterminée dans un plan perpendiculaire à la direction de détection (D),
d) un jeu de coordonnées est déterminé dans le système de coordonnées de détection en fonction de la forme de la première zone d'intérêt (ROI₁), lequel est suffisant pour une définition univoque de la position et des dimensions de la première zone d'intérêt (ROI₁) dans le champ d'image et ainsi dans le système de coordonnées de détection,
e) les paramètres de début et de fin d'un premier enregistrement de la pile d'images sont déterminés avec cet angle d'orientation (α₁),
f) un volume d'échantillon V_{P} dans le système de coordonnées d'échantillon est déterminé à partir de la position du centre du champ d'image de l'image de projection, du jeu de coordonnées et des paramètres de début et de fin du premier enregistrement de la pile d'images,
- les paramètres nécessaires à l'enregistrement de piles d'images supplémentaires sont déterminés dans le système de coordonnées d'échantillon pour les angles d'orientation (αᵢ) supplémentaires à l'aide du volume d'échantillon V_{P}, l'échantillon (2) est positionné en conséquence dans le système de coordonnées de détection et l'enregistrement de la pile d'images est effectué pour chaque angle d'orientation (αᵢ).

5. Procédé selon la revendication 4, **caractérisé en ce que** la zone d'intérêt (ROI₁) est de configuration rectangulaire et les coordonnées (x₁^{b}, y₁^{b}) indiquent le centre du rectangle dans le système de coordonnées de détection et les dimensions du rectangle sont mémorisées dans les coordonnées (x₁^{c}, y₁^{c}).

6. Procédé selon l'une des revendications 1 à 5, **caractérisé en ce que** le plan dans le champ d'image correspond au plan focal.

7. Procédé selon l'une des revendications 1 à 6, **caractérisé en ce que** la position de l'axe de rotation (R) par rapport au système de coordonnées de détection est déterminée dans une étape d'étalonnage qui précède l'enregistrement.

8. Procédé selon l'une des revendications 1 à 8, **caractérisé en ce que** l'enregistrement de piles d'images est effectué dans le cadre d'une analyse microscopique de l'échantillon, lors de laquelle l'échantillon (2) est éclairé par une feuille de lumière dont le champ de déploiement est sensiblement perpendiculaire à la direction de détection (D).

9. Procédé selon l'une des revendications 1 à 8, **caractérisé en ce que** la détermination du volume de coupe est effectuée de manière automatisée.
